# FASCICULE DE BREVET EUROPEEN

(11) **EP 2 527 249 B1**
(45) Date de publication et mention de la délivrance du brevet: **17.12.2014**
(21) Numéro de dépôt: 12169212.3
(22) Date de dépôt: 24.05.2012
(51) Int. Cl.: B64C 25/40

(54) **Dispositif d'interface débrayable entre un système de motorisation de roue de train d'atterrissage d'avion et une roue**
Auskuppelbare Antriebsvorrichtung für ein Rad eines Flugzeugfahrwerks
Disengageable interface device of a drive system between an aircraft landing gear wheel and a wheel

(30) Priorité: 27.05.2011 FR 1154643
(43) Date de publication de la demande: 28.11.2012
(73) Titulaire: Airbus Operations S.A.S., 31060 Toulouse (FR)
(72) Inventeur: Tizac, Laurent, 31170 Tournefeuille (FR)
(74) Mandataire: Gicquel, Olivier Yves Gérard

(56) Documents cités:
- FR-A1- 2 693 757
- US-A- 3 397 589
- US-A- 3 850 389

## Description

La présente invention a pour objet un dispositif de motorisation d'une roue de train d'atterrissage d'avion comportant un dispositif d'interface débrayable entre la motorisation et la roue.

### Préambule et art antérieur

Actuellement, de façon classique, les avions évoluant au sol, en zone aéroportuaire, à partir de leur point de stationnement ont besoin de l'assistance de véhicules tracteurs qui les amènent en un point où les réacteurs peuvent être mis à contribution pour pousser l'avion. Cette contrainte génère des délais avant décollage, alors que la rotation des avions doit être la plus rapide possible pour d'évidentes raisons économiques.

Par ailleurs, lors de l'atterrissage des avions, ceux-ci se déplacent au sol en utilisant la poussée de leurs réacteurs, ce qui constitue à la fois une gêne acoustique pour le voisinage, une dépense de carburant peu efficace ainsi qu'une usure prématurée des freins.

On appelle au contraire "avion autonome" ("autonomous aircraft") un avion capable de se déplacer seul, au sol, lors des opérations de roulage depuis la piste d'atterrissage vers le point de stationnement, et en sens inverse, depuis ce point de stationnement vers la piste de décollage. Cette autonomie suppose naturellement une motorisation au niveau des trains d'atterrissage de l'avion.

On connait, à ce sujet, divers mécanismes de motorisation de train, utilisant par exemple des moteurs électriques, installés au voisinage des roues, comme par exemple montré dans le document US-A-3 850 389. De tels systèmes sont généralement associés à des embrayages encombrants et mal intégrés au train d'atterrissage.

### Exposé de l'invention

L'invention vise un dispositif de motorisation d'une roue de train d'atterrissage d'avion comportant un moteur / réducteur et un dispositif d'interface apte à être installé entre le moteur / réducteur et la roue.

Le dispositif d'interface comporte:
- un pignon d'entrée adapté à être directement entraîné par le moteur / réducteur, et articulé autour d'un axe de rotation définissant un axe dit latéral Y,
- une roue dentée, d'axe parallèle à l'axe latéral Y, et apte à entraîner en rotation la jante de ladite roue, la roue dentée et le pignon d'entrée étant disposés dans un même plan vertical XZ, un axe dit vertical Z étant défini par la ligne des centres du pignon d'entrée et de la roue dentée, et un axe dit longitudinal X étant défini comme perpendiculaire à l'axe vertical Z dans le plan moyen de la roue dentée et du pignon d'entrée,
- un élément pendulaire, articulé autour de l'axe de rotation du pignon d'entrée, et indexé en positon neutre, portant un pignon intermédiaire disposé, dans le plan XZ, au côté du pignon d'entrée, et entrainé en rotation, autour d'un axe parallèle à l'axe latéral Y, par la rotation du pignon d'entrée,
le pignon intermédiaire comportant un dispositif de blocage de rotation,
la course angulaire de l'élément pendulaire autour de son axe de rotation, étant limitée par une butée réglable,
cette butée réglable étant réglée de telle sorte que, lorsque l'élément pendulaire vient au contact de la butée, le dispositif de blocage du pignon intermédiaire est juste libéré, alors qu'il est engagé lorsque l'élément pendulaire est en position neutre,
la distance entre l'axe de rotation de l'élément pendulaire et l'axe de rotation de la roue dentée étant déterminée par les rayons du pignon intermédiaire et de ladite roue dentée, et par le fait que la roue dentée et le pignon intermédiaire sont engrenés lorsque l'élément pendulaire vient se bloquer contre la butée réglable.

Il est à noter que le dispositif pendulaire est préférentiellement indexé dans sa position neutre afin de n'être affecté d'aucune manière par les vibrations au roulage ou en vol.

Dans cette disposition, le dispositif est adapté à entraîner le train d'atterrissage dans une seule direction.

Selon un mode préféré de réalisation, dans lequel le dispositif peut mouvoir le train d'atterrissage dans les deux directions, le dispositif comporte :
- un premier et un second pignons intermédiaires coplanaires, disposés, sur l'élément pendulaire, de part et d'autre du pignon d'entrée, et entrainés en rotation par la rotation de celui-ci,
   au moins l'un des premier et second pignon intermédiaire comportant un dispositif de blocage de rotation,
   la course angulaire de l'élément pendulaire autour de son axe de rotation, étant limitée entre une valeur minimale et une valeur maximale, par une première et une seconde butées réglables,
   ces butées réglables étant réglées de telle sorte que :
   1- les lignes d'engrènement d'un pignon avec la roue dentée soient conformes à la théorie,
   2- lorsque l'élément pendulaire vient au contact d'une butée, le dispositif de blocage des pignons intermédiaires est juste libéré, alors qu'il est engagé lorsque l'élément pendulaire est en position neutre,
cet ensemble pendulaire faisant face à une roue dentée, coaxiale de la roue du train d'atterrissage, ladite roue dentée étant apte apte à entraîner en rotation la jante de ladite roue,
la distance entre l'axe de rotation de l'élément pendulaire et l'axe de rotation de la roue dentée étant déterminée par les rayons des pignons intermédiaires et de ladite roue dentée, et par le fait que la roue dentée et l'un ou l'autre pignon intermédiaire sont engrenés lorsque l'élément pendulaire vient se bloquer contre l'une ou l'autre butée réglable.

Selon un mode de réalisation préféré, chaque pignon intermédiaire comporte un dispositif de blocage, ces dispositifs de blocage étant portés par l'élément pendulaire, et étant synchronisés, de manière à ce que les deux pignons intermédiaires soient simultanément bloqués ou simultanément libres,

Préférentiellement, lorsqu'un pignon intermédiaire commence à s'engrener dans la roue dentée, l'élément pendulaire n'étant pas encore bloqué par une butée réglable, le dispositif de blocage est partiellement libéré et détermine un jeu en rotation au premier pignon intermédiaire. Cette disposition permet de s'assurer que le pignon et la roue dentée trouvent une position dans laquelle ils sont parfaitement engrenés.

L'organisation même des butées permet un effet de cliquet par rapport à l'élément pendulaire.

L'invention vise sous un second aspect un train d'atterrissage comportant un dispositif de motorisation de roue tel qu'exposé.

Sous encore un autre aspect, l'invention vise un aéronef comportant un dispositif de motorisation de roue tel qu'exposé.

### Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur les figures annexées dans lesquelles :
La figure 1 illustre de façon schématique en vue de face l'implantation du dispositif au sein du train d'atterrissage d'avion,
La figure 2 illustre selon une même vue une extraction d'une jante de roue du train d'atterrissage, sans enlever le mécanisme d'interface,
Les figures 3 à 6 illustrent de façon schématique les positions relatives des différents pignons du dispositif d'interface lors du passage d'une position neutre à une position de marche dans une direction,
La figure 7 illustre, selon la même schématique, la situation d'une vitesse excessive d'une roue du train d'atterrissage,
La figure 8 illustre, dans ce cas, les forces créées au point de contact des dents du pignon intermédiaire et de la roue dentée, et les couples résultant au niveau de l'élément pendulaire,
La figure 9 illustre, selon la schématique des figures 3 à 6, le situation d'un mouvement forcé du train en sens inverse du mode d'engagement du moteur,
La figure 10 illustre, dans ce cas, les forces créées au point de contact des dents du pignon intermédiaire et de la roue dentée, et les couples résultant au niveau de l'élément pendulaire.

### Description détaillée d'un mode de réalisation de l'invention

L'invention trouve sa place au sein d'un train d'atterrissage d'avion (MLG, de l'anglais "Main Landing Gear"), du type comportant, dans le présent exemple non limitatif, deux roues disposées symétriquement autour d'un plan vertical moyen.

On note cependant que l'invention peut, de même, s'appliquer à un atterrisseur ne possédant qu'une seule roue

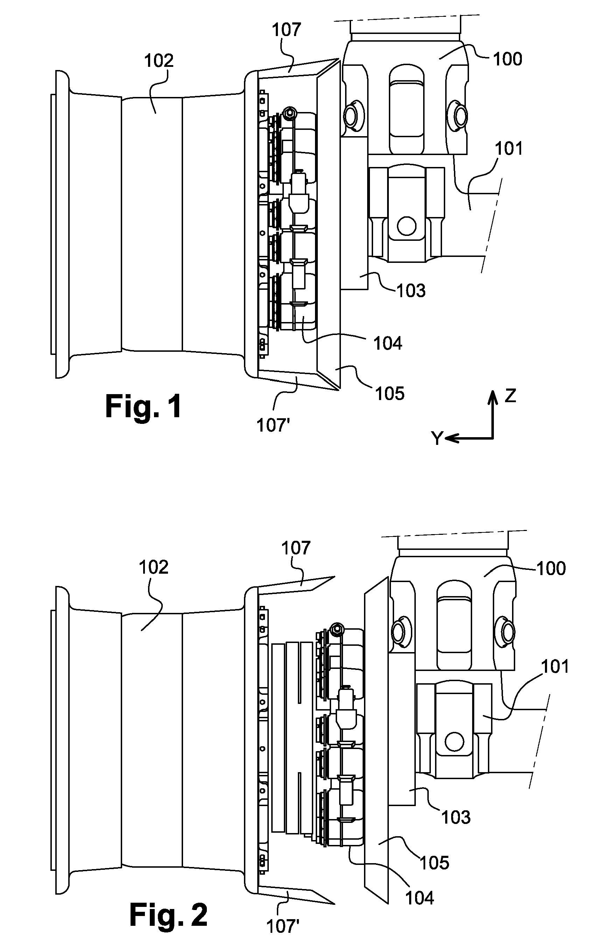

La figure 1 illustre une vue de détail d'un tel train d'atterrissage, vu de face.

On définit pour la suite de la description un repère par rapport à ce train d'atterrissage, ledit repère comportant
- un axe longitudinal X parallèle à la direction de mouvement des roues,
- un axe latéral Y parallèle à la direction de l'axe des roues,
- un axe vertical Z perpendiculaire aux axes précédents.

Les termes d'avant, arrière, haut bas etc. sont définis par rapport à ce repère.

On reconnait sur la figure 1 la jambe 100 d'un train d'atterrissage, la tige d'amortisseur 101 supportant les roues par l'intermédiaire de fusées dudit train d'atterrissage, qui vient porter deux jantes de roues 102 (dont une seule est illustrée figure 1), dotée chacune d'un frein 104. Le train d'atterrissage comporte également ici un moteur / réducteur 103, ici de type électrique, destiné à entraîner les roues. Le dimensionnement de ce moteur / réducteur 103 est fait par référence aux normes et contraintes techniques de l'avion, de façon connue de l'homme du métier.

Dans le mode de réalisation décrit ici à titre non limitatif, un mécanisme d'interface est installé, pour chaque roue, entre le moteur 103 et le frein 104. Par rapport à la disposition "classique" du frein, celui-ci est ici déplacé légèrement de la valeur nécessaire à l'intégration dudit mécanisme d'Interface vers l'intérieur de la jante 102.

Ce dispositif d'interface comprend une partie tournante 105 entraînée par le moteur / réducteur 103. Cette partie tournante 105 se présente en sous la forme d'un disque. La partie tournante 105 du dispositif d'interface est reliée au dernier étage de réduction de la boite de transmission du moteur / réducteur 103 par un joint de transmission, par exemple de type joint de Oldham.

De la sorte, le mécanisme d'interface est isolé des déplacements parasites éventuels de l'axe 101, sur lequel est fixé le moteur / réducteur 103.

Cette partie tournante 105 comporte une série d'emplacements en creux, ménagés sur son pourtour (voir figure 2), et destinés à recevoir les extrémités de barres de transmission de couple 107, solidaires de la jante 102. De la sorte, le démontage et la réinstallation de la jante 102 sont possible de façon très rapide, sans être pénalisées par l'existence du mécanisme de motorisation et d'interface.

Les barres de transmission de couple 107 sont dimensionnées de manière à leur permettre de reprendre les efforts de couple qui doivent être appliqués aux roues.

En outre, dans le but de protéger l'ensemble du dispositif d'interface contre l'ingestion de corps étrangers, d'eau, de sable ou de poussière, la partie tournante 105 héberge, dans le présent mode de réalisation, les mécanismes internes qui participent à la transmission du couple entre le moteur / réducteur 103 et la roue. Seuls les emplacements en creux sont disposés à l'extérieur de la partie tournante 105.

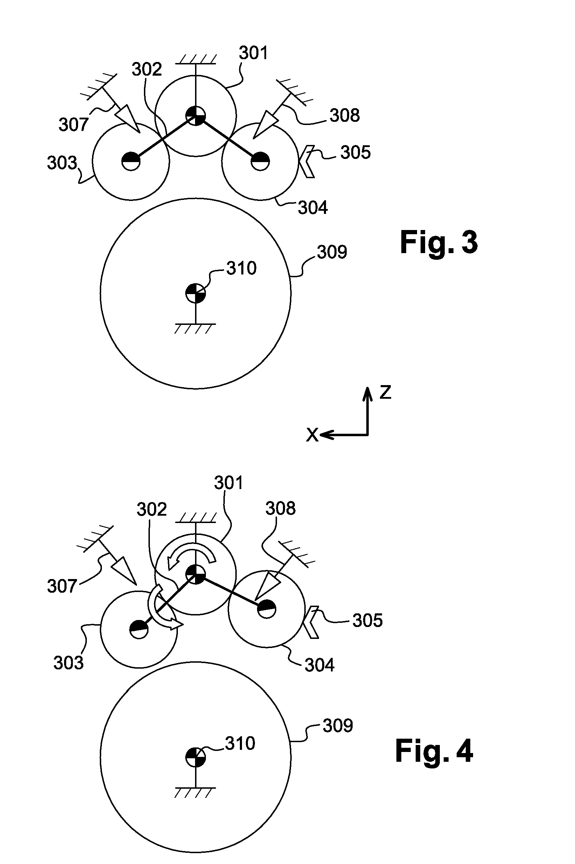

Entre le moteur / réducteur 103 et la partie tournante 105, le dispositif d'interface comporte un pignon d'entrée 301 (figure 3) adapté à être directement entraîné par le moteur / réducteur 103, et articulé autour d'un axe de rotation 306 ici parallèle à l'axe latéral Y.

Un élément pendulaire 302, également articulé autour de l'axe de rotation 306 du pignon d'entrée 301, porte un premier et un second pignons intermédiaires 303, 304, coplanaires du pignon d'entrée et de la roue dentée, disposés de part et d'autre du pignon d'entrée 301, et entrainés en rotation par la rotation de celui-ci.

On note ici que, pour des besoins spécifiques de vitesse et de couple liées aux marches avant et arrière, les pignons 303 et 304 peuvent avoir des diamètres différents.

Le second pignon intermédiaire 304 comporte un dispositif de blocage de sa rotation 305 (par exemple configuré sous forme de griffes venant s'engager dans les dents du pignon). De même, le premier pignon intermédiaire 303 comporte un dispositif de blocage de sa rotation 310. Ces deux dispositifs de blocage 305, 310 sont portés par l'élément pendulaire 302. Ils sont synchronisés, par exemple par un jeu d'engrenages, de manière à ce que les deux pignons intermédiaires 303, 304 soient simultanément bloqués ou simultanément libres. En variante, un seul dispositif de blocage est installé face à un des pignons intermédiaires 303, 304 et peut même être préféré.

La course angulaire de l'élément pendulaire 302 autour de son axe de rotation 306, est limitée entre une valeur minimale et une valeur maximale, par une première et une seconde butées réglables 307, 308.

Ces butées réglables 307, 308 sont ici réglées de telle sorte que, lorsque l'élément pendulaire 302 vient au contact d'une butée réglable, le dispositif de blocage des pignons intermédiaires est juste libéré, alors qu'il est engagé lorsque l'élément pendulaire 302 est en position neutre. (voir commentaire lié aux lignes d'engrènement)

Cet ensemble fait face à une roue dentée 309, solidaire de la partie tournante 105 du dispositif d'interface, laquelle entraîne la jante 102 d'une roue du train d'atterrissage par l'intermédiaire des barres de transmission de couple 107.

La distance entre l'axe de rotation 306 de l'élément pendulaire et l'axe de rotation 310 de la roue dentée 309 est déterminée par les rayons des pignons intermédiaires 303, 304 et de ladite roue dentée 309, et par le fait que ces roues sont en parfait engrènement l'une par rapport à l'autre lorsque l'élément pendulaire vient se bloquer contre l'une ou l'autre butée réglable 307, 308.

Le harnais d'alimentation du moteur électrique et le logiciel utilisé pour le pilotage des opérations de l'avion au sol sortent du cadre de la présente invention et ne sont donc pas décrits ici.

### Mode de fonctionnement

La description du mode d'opération du dispositif d'interface est faite en référence aux figures 3 à 6. Ces figures doivent être interprétées comme illustrant le principe de fonctionnement, et non comme donnant une représentation fidèle des tailles respectives des divers pignons impliqués.

En fonctionnement, l'un des points clés de la présente invention est de laisser libre la partie tournante 105 du mécanisme de l'interface (non engagée vis-à-vis du moteur / réducteur 103), pour toutes les phases de vol sauf les phases commandées, sans nécessiter l'ajout d'un embrayage qui augmenterait la complexité mécanique de l'interface, et donc son volume et son poids, tout en réduisant sa fiabilité.

Dans une première position, illustrée figure 3, le moteur / réducteur 103 est à l'arrêt et l'avion est immobile (donc la roue dentée 309 l'est également). Dans cette position, l'élément pendulaire 302 est dans une position dite neutre, telle que les deux pignons intermédiaires 303, 304 ne sont pas au contact de la roue dentée 309. Le dispositif de blocage de marche avant 305 du second pignon intermédiaire 304 est engagé.

Dans une seconde position illustrée figure 4, le moteur / réducteur 103 est mis en marche (dans un sens supposé ici correspondre à une évolution vers l'avant de l'avion), et commence à entraîner en rotation le pignon d'entrée 301. Le dispositif de blocage 305 de la rotation de l'un des pignons intermédiaires 303 ou 304 étant engagé, le mouvement de rotation du pignon d'entrée 301 amène l'élément pendulaire 302 à tourner autour de son axe 306 dans le même sens que le pignon d'entrée 301.

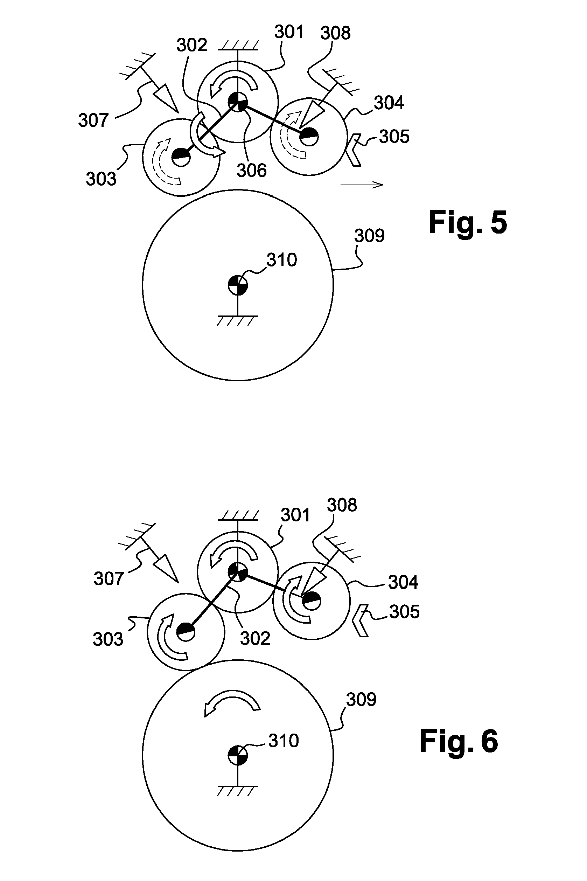

Dans une troisième position illustrée par la figure 5, le premier pignon intermédiaire 303 commence à vouloir s'engrener dans la roue dentée 309, mais l'élément pendulaire 302 n'est pas encore bloqué par la seconde butée 308. Le dispositif de blocage 305 de rotation des pignons intermédiaire est partiellement libéré et fournit un peu de jeu en rotation au premier pignon intermédiaire 303 (ce qui est illustré sur la figure 5 par la flèche en pointillé autour de l'axe du premier pignon intermédiaire 303). Ce jeu est très important en ce qu'il assure que les dents dudit pignon 303 s'engrènent parfaitement dans les dents de la roue dentée 309 et ne se bloquent pas sur la pointe de celles-ci.

Enfin, dans une quatrième position illustrée par la figure 6, le premier pignon intermédiaire 303 entraîne la roue dentée 309, l'élément pendulaire 302 est encore bloqué par la seconde butée 308, et le dispositif de blocage de marche avant 305 du second pignon intermédiaire 304 est totalement libéré.

Dans cette quatrième position, le moteur / réducteur 103 entraîne la roue dentée 309 par l'intermédiaire du pignon d'entrée 301 et du premier pignon intermédiaire 303. Le second pignon intermédiaire 304 tourne librement autour de son axe, également entraîné par le pignon d'entrée 301.

Lors de l'arrêt du moteur / réducteur 103, ces mêmes étapes sont parcourues en sens inverse.

Par construction, à l'arrêt du moteur, le pignon 303 (ou 304) reste engrené avec la roue 309. Toutefois, pour revenir en position neutre le moteur / réducteur 103 devra être animé d'un mouvement inverse à celui qui a conduit l'un des pignons précités à engrener avec la roue 309.

De par la symétrie de fonctionnement du système on comprend que ce qui vient d'être exposé s'applique de façon identique vis à vis d'une mise en route du moteur / réducteur 103 dans l'autre sens de rotation (supposé ici correspondre à une évolution vers l'arrière de l'avion), en remplaçant le premier pignon intermédiaire 303 par le second pignon intermédiaire 304, et les butées et dispositifs de blocage du second pignon intermédiaire 304 par ceux du premier pignon intermédiaire 303.

Il est à noter qu'au démarrage, la roue du train d'atterrissage (et donc la roue dentée 309) offre une résistance significative au mouvement du fait de l'inertie de l'avion. De ce fait, le premier pignon intermédiaire 303 va, en continuant sa rotation, spontanément venir trouver la position qui lui permet de s'engager au maximum au sein des indentations de la roue dentée 309, ce qui garantit un engrenage optimum et une bonne transmission des efforts.

De plus, du fait de la position relative des deux engrenages (premier pignon intermédiaire 303 et roue dentée 309), l'engagement de ces deux engrenages est maintenu aussi longtemps que le moteur / réducteur 103 est en marche. En effet, l'effort appliqué par le premier pignon intermédiaire 303, pour entraîner la roue dentée 309 (qui est passive et résiste à la rotation du fait de la friction naturelle au roulement de l'avion), vient augmenter le couple exercé par l'élément pendulaire 302 sur le premier pignon intermédiaire 303, ce qui assure un engrenage maximum.

Dans cette situation, la vitesse relative des deux engrenages 303, 309 est directement proportionnelle au rapport d'engrenage.

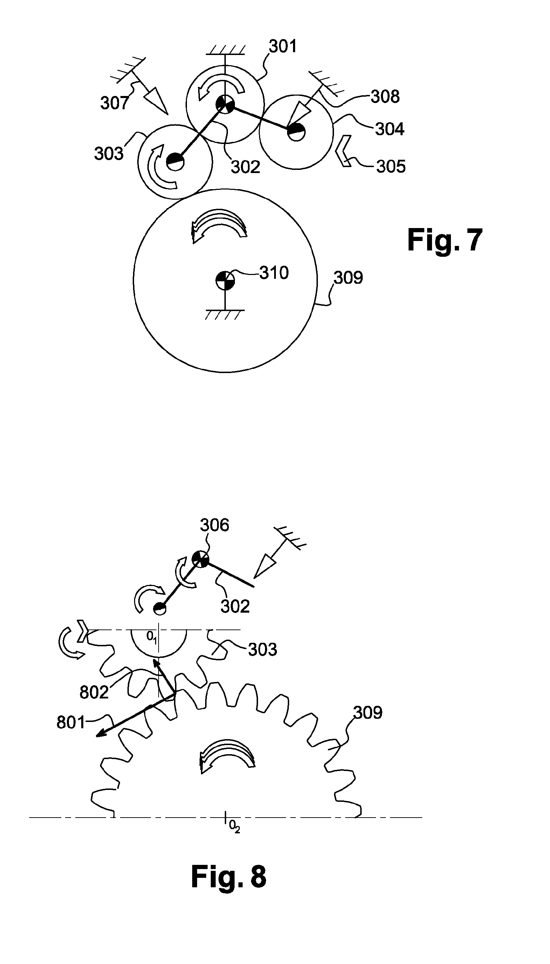

La figure 7 illustre, par contre, la situation d'une vitesse excessive de roulement des roues du train d'atterrissage par rapport à la vitesse du premier pignon intermédiaire 303. Dans ce cas, et comme on le voit plus en détail sur la figure 8, du fait de la forme des dents du pignon 303 et de la roue dentée 309 et du fait de la présence de la butée 308 ne restreignant le mouvement pendulaire que dans le sens de l'engagement du pignon 303 (ou 304) dans la roue 309, la force exercée par la roue dentée 309 sur le premier pignon intermédiaire 303 comporte une composante tangentielle 801 et une composante radiale 802 orientée vers l'extérieur de la roue dentée 309. Ces composantes 801, 802 génèrent un couple de désengagement de l'élément pendulaire 302 autour de son axe 306 qu'aucune des butées ne vise à prévenir.

Le premier pignon intermédiaire 303 est libre de se déplacer vers le haut, selon la courbe déterminée par la rotation de l'élément pendulaire 302. Il se désengage alors naturellement de la roue dentée 309.

Cette situation va créer un mouvement de cliquet du premier pignon intermédiaire 303 de et vers la roue dentée 309, jusqu'à ce que les vitesses de rotations relatives des deux éléments 303, 309 soient à nouveau compatibles.

Il est clair que cette capacité de désengagement peut être commandée volontairement, en ralentissant le moteur / réducteur 103.

Plus encore, il est possible de commander le moteur / réducteur 103 en sens inverse. Ceci amène le second pignon intermédiaire 304 à être engagé sur la roue dentée 309, et permet d'utiliser le moteur / réducteur 103 comme frein électromagnétique.

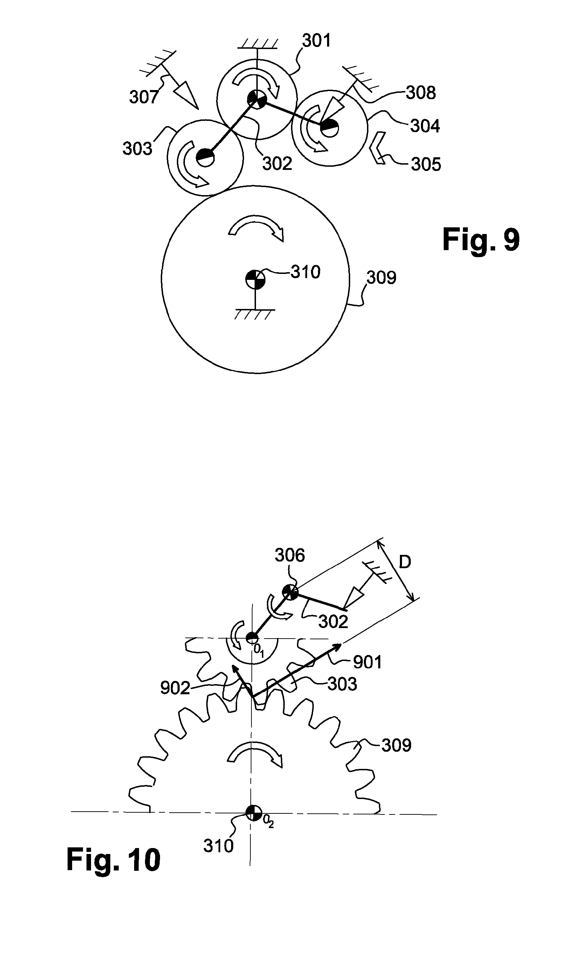

Les figures 9 et 10 illustrent une situation dans laquelle l'avion se déplace dans un sens opposé au sens d'engagement du dispositif d'interface (sur la figure 9, le dispositif d'interface est engagé de façon analogue aux figures 3 à 6, décrit plus haut comme un mouvement de marche avant, avec un mouvement des roues en sens inverse).

Dans cette situation, du fait de la forme des dents du pignon 303 et de la roue dentée 309 ainsi que la présence de la butée 308, la force exercée par la roue dentée 309 sur le premier pignon intermédiaire 303 comporte une composante tangentielle 901 (de sens opposé à celle du cas précédent) et une composante radiale 902, orientée, ici encore, vers l'extérieur de la roue dentée 309.

La composante tangentielle 901 étant nettement plus grande que la composante radiale 902, le couple généré par ces forces sur l'élément pendulaire 302 est un couple d'engagement qui maintient les deux roues 303, 309 engrenées. Le moteur / réducteur 103 est alors passivement entraîné par le mouvement de la roue dentée 309

### Avantages

Le dispositif de motorisation et d'interface tel qu'exposé respecte les contraintes imposées par les normes réglementaires :
- Le dispositif permet le mouvement de l'avion vers l'avant et vers l'arrière en fournissant une puissance mécanique et un couple aux roues du train (dans le cas de marche arrière, le rapport d'engrenage peut être choisi différent du rapport d'engrenage de marche avant),
- Le dispositif peut être débrayé pendant toutes les autres phases de vol,
- Le dispositif permet de contrôler chaque roue indépendamment en termes de vitesse ou de couple,
- Le dispositif est en mesure de passer directement du mode actif en mode de veille,
- Le dispositif est en mesure de fournir un couple retard aux roues en roulage avant et arrière,
- Le dispositif et son installation ont un impact réduit sur la conception de la structure du train d'atterrissage

On note qu'il n'y a pas de changement dans le processus de démontage et remontage des freins ni des roues, donc, pas de pénalités en termes de temps de maintenance.

Le système tel qu'exposé est capable :
- d'être désengagé et bloqué dans sa position de désengagement en cas de besoin,
- de se débrayer automatiquement en cas d'excès de vitesse (mécanisme à cliquet)
- d'amener le moteur en arrière en cas de mouvement inverse de l'avion à la direction pour laquelle le système est engagé,
- d'être intentionnellement désengagé tandis que l'avion est en mouvement et d'être ensuite réengagé dans le sens opposé dans le but de contribuer au freinage de l'avion.

## Revendications

1. Dispositif de motorisation d'une roue de train d'atterrissage d'avion comportant un moteur / réducteur (103) et un dispositif d'interface apte à être installé entre le moteur / réducteur (103) et la roue,
**caractérisé en ce que** le dispositif d'interface comporte :
- un pignon d'entrée (301) adapté à être directement entraîné par le moteur / réducteur (103), et articulé autour d'un axe de rotation (306) définissant un axe dit latéral Y,
- une roue dentée (309), d'axe parallèle à l'axe latéral Y, et apte à entraîner en rotation la jante (102) de ladite roue, la roue dentée et le pignon d'entrée étant disposés dans un même plan vertical XZ, un axe dit vertical Z étant défini par la ligne des centres du pignon d'entrée (301) et de la roue dentée (309), et un axe dit longitudinal X étant défini comme perpendiculaire à l'axe vertical Z dans le plan moyen de la roue dentée et du pignon d'entrée,
- un élément pendulaire (302), articulé autour de l'axe de rotation (306) et indexé en position neutre, portant un pignon intermédiaire (303) disposé dans le plan XZ, au côté du pignon d'entrée (301), et entrainé en rotation autour d'un axe parallèle à l'axe latéral Y, par la rotation du pignon d'entrée (301),
le pignon intermédiaire (304) comportant un dispositif de blocage de rotation (305),
la course angulaire de l'élément pendulaire (302) autour de son axe de rotation (306), étant limitée par une butée réglable (308),
cette butée réglable (308) étant réglée de telle sorte que, lorsque l'élément pendulaire (302) vient au contact de la butée réglable (308), le dispositif de blocage du pignon intermédiaire (305) est juste libéré, alors qu'il est engagé lorsque l'élément pendulaire (302) est en position neutre,
la distance entre l'axe de rotation (306) de l'élément pendulaire et l'axe de rotation (310) de la roue dentée (309) étant déterminée par les rayons du pignon intermédiaire (303) et de ladite roue dentée (309), et par le fait que la roue dentée et le pignon intermédiaire (303) sont complètement engrenés lorsque l'élément pendulaire (302) vient se bloquer contre la butée réglable (308).

2. Dispositif selon la revendication 1, **caractérisé en ce qu'**il comporte un premier et un second pignons intermédiaires (303, 304) situés dans le plan vertical XZ, disposés, sur l'élément pendulaire (302), de part et d'autre du pignon d'entrée, et entrainés en rotation par la rotation de celui-ci,
au moins l'un des premier et second pignon intermédiaire (304) coplanaires, comportant un dispositif de blocage de rotation (305),
la course angulaire de l'élément pendulaire (302) autour de son axe de rotation (306), étant limitée entre une valeur minimale et une valeur maximale, par une première et une seconde butées réglables (307, 308),
ces butées réglables (307, 308) étant réglées de telle sorte que :
a) les lignes d'engrènement d'un pignon avec la roue dentée soient conformes à la théorie,
b) lorsque l'élément pendulaire (302) vient au contact d'une butée, le dispositif de blocage du pignon intermédiaire (305) est juste libéré, alors qu'il est engagé lorsque l'élément pendulaire (302) est en position neutre,
cet ensemble pendulaire faisant face à une roue dentée (309), coaxiale de la roue du train d'atterrissage, ladite roue dentée étant apte à entraîner en rotation la jante (102) de ladite roue,
la distance entre l'axe de rotation (306) de l'élément pendulaire et l'axe de rotation (310) de la roue dentée (309) étant déterminée par les rayons des pignons intermédiaires (303, 304) et de ladite roue dentée (309), et par le fait que la roue dentée et l'un ou l'autre pignon intermédiaire sont engrenés lorsque l'élément pendulaire vient se bloquer contre l'une ou l'autre butée réglable (307, 308).

3. Dispositif selon la revendication 2, **caractérisé en ce que** chaque pignon intermédiaire (303, 304) comporte un dispositif de blocage (305, 310), ces dispositifs de blocage (305, 310) étant portés par l'élément pendulaire (302), et étant synchronisés, de manière à ce que les deux pignons intermédiaires (303, 304) soient simultanément bloqués ou simultanément libres.

4. Dispositif selon la revendication 2 ou 3, **caractérisé en ce que**, lorsque un pignon intermédiaire (303) commence à s'engrener dans la roue dentée (309), l'élément pendulaire (302) n'étant pas encore bloqué par une butée réglable (307, 308), le dispositif de blocage (305, 310) est partiellement libéré et détermine un jeu en rotation au premier pignon intermédiaire (303).

5. Train d'atterrissage d'aéronef, **caractérisé en ce qu'**il comporte un dispositif de motorisation selon l'une quelconque des revendications précédentes.

6. Aéronef, **caractérisé en ce qu'**il comporte un dispositif de motorisation selon l'une quelconque des revendications 1 à 4.

## Patentansprüche

1. Antriebsvorrichtung eines Flugzeugfahrwerkrads, die einen Motor / Getriebe (103) und eine Schnittstellenvorrichtung aufweist, die zwischen dem Motor / Getriebe (103) und dem Rad eingebaut werden kann,
**dadurch gekennzeichnet, dass die** Schnittstellenvorrichtung aufweist:
- ein Eingangsritzel (301), das geeignet ist, um direkt vom Motor / Getriebe (103) angetrieben zu werden, und um eine Drehachse (306) angelenkt ist, die eine so genannte seitliche Achse Y definiert,
- ein Zahnrad (309) mit einer Achse parallel zur seitlichen Achse Y, und das die Felge (102) des Rads in Drehung versetzen kann, wobei das Zahnrad und das Eingangsritzel in der gleichen senkrechten Ebene XZ angeordnet sind, wobei eine so genannte senkrechte Achse Z durch die Linie der Mitten des Eingangsritzels (301) und des Zahnrads (309) definiert wird, und eine so genannte Längsachse X als lotrecht zur senkrechten Achse Z in der Mittelebene des Zahnrads und des Eingangsritzels definiert wird,
- ein um die Drehachse (306) angelenktes und in der neutralen Stellung indexiertes Pendelelement (302), das ein Zwischenritzel (303) trägt, welches in der Ebene XZ auf der Seite des Eingangsritzels (301) angeordnet ist und durch die Drehung des Eingangsritzels (301) um eine Achse parallel zur seitlichen Achse Y in Drehung versetzt wird,
wobei das Zwischenritzel (304) eine Drehblockiervorrichtung (305) aufweist,
wobei der Winkelhub des Pendelelements (302) um seine Drehachse (306) von einem einstellbaren Anschlag (308) begrenzt wird,
wobei dieser einstellbare Anschlag (308) so eingestellt ist, dass die Blockiervorrichtung des Zwischenritzels (305) gerade gelöst ist, wenn das Pendelelement (302) mit dem einstellbaren Anschlag (308) in Kontakt kommt, während sie eingerückt ist, wenn das Pendelelement (302) in neutraler Stellung ist,
wobei der Abstand zwischen der Drehachse (306) des Pendelelements und der Drehachse (310) des Zahnrads (309) durch die Radien des Zwischenritzels (303) und des Zahnrads (309) und dadurch bestimmt wird, dass das Zahnrad und das Zwischenritzel (303) vollständig in Eingriff sind, wenn das Pendelelement (302) gegen den einstellbaren Anschlag (308) blockiert ist.

2. Vorrichtung nach Anspruch 1, **dadurch gekennzeichnet, dass** sie ein erstes und ein zweites in der senkrechten Ebene XZ befindliches Zwischenritzel (303, 304) aufweist, die auf dem Pendelelement (302) zu beiden Seiten des Eingangsritzels angeordnet sind und von dessen Drehung in Drehung versetzt werden,
wobei mindestens eines der ersten und zweiten koplanaren Zwischenritzel (304) eine Drehblockiervorrichtung (305) aufweist,
wobei der Winkelhub des Pendelelements (302) um seine Drehachse (306) durch einen ersten und einen zweiten einstellbaren Anschlag (307, 308) zwischen einem minimalen Wert und eine maximalen Wert begrenzt wird,
wobei diese einstellbaren Anschläge (307, 308) so eingestellt sind, dass:
a) die Eingriffslinien eines Ritzels mit dem Zahnrad der Theorie entsprechen,
b) wenn das Pendelelement (302) mit einem Anschlag in Kontakt kommt, die Blockiervorrichtung des Zwischenritzels (305) gerade gelöst ist, während sie eingerückt ist, wenn das Pendelelement (302) in neutraler Stellung ist,
wobei diese Pendeleinheit einem Zahnrad (309) koaxial zum Rad des Fahrwerks gegenüberliegt, wobei das Zahnrad die Felge (102) des Rads in Drehung versetzen kann,
wobei der Abstand zwischen der Drehachse (306) des Pendelelements und der Drehachse (310) des Zahnrads (309) durch die Radien der Zwischenritzel (303, 304) und des Zahnrads (309) und dadurch bestimmt wird, dass das Zahnrad und das eine oder andere Zwischenritzel in Eingriff sind, wenn das Pendelelement gegen den einen oder anderen einstellbaren Anschlag (307, 308) blockiert wird.

3. Vorrichtung nach Anspruch 2, **dadurch gekennzeichnet, dass** jedes Zwischenritzel (303, 304) eine Blockiervorrichtung (305, 310) aufweist, wobei diese Blockiervorrichtungen (305, 310) vom Pendelelement (302) getragen werden und synchronisiert sind, damit die zwei Zwischenritzel (303, 304) gleichzeitig blockiert oder gleichzeitig frei sind.

4. Vorrichtung nach Anspruch 2 oder 3, **dadurch gekennzeichnet, dass**, wenn ein Zwischenritzel (303) beginnt, in das Zahnrad (309) einzugreifen, wobei das Pendelelement (302) noch nicht von einem einstellbaren Anschlag (307, 308) blockiert wird, die Blockiervorrichtung (305, 310) teilweise gelöst ist und ein Drehspiel am ersten Zwischenritzel (303) bestimmt.

5. Luftfahrzeug-Fahrwerk, **dadurch gekennzeichnet, dass** es eine Antriebsvorrichtung nach einem der vorhergehenden Ansprüche aufweist.

6. Luftfahrzeug, **dadurch gekennzeichnet, dass** es eine Antriebsvorrichtung nach einem der Ansprüche 1 bis 4 aufweist.

## Claims

1. Drive device for an aircraft landing gear wheel comprising a motor/reduction gear unit (103) and an interface device which is able to be installed between the motor/reduction gear unit (103) and the wheel, **characterized in that** the interface device comprises:
- an input pinion (301) which is designed to be driven directly by the motor/reduction gear unit (103) and which is articulated about an axis of rotation (306) defining an axis referred to as the lateral axis Y,
- a toothed wheel (309) which has an axis parallel to the lateral axis Y and which is able to drive the rim (102) of said wheel in rotation, the toothed wheel and the input pinion being arranged in one and the same vertical plane XZ, an axis referred to as the vertical axis Z being defined by the line of the centres of the input pinion (301) and of the toothed wheel (309), and an axis referred to as the longitudinal axis X being defined as perpendicular to the vertical axis Z in the mean plane of the toothed wheel and of the input pinion,
- a pendular element (302) which is articulated about the axis of rotation (306) and is indexed in the neutral position, bearing an intermediate pinion (303) which is arranged in the XZ plane, next to the input pinion (301), and is driven in rotation about an axis parallel to the lateral axis Y by the rotation of the input pinion (301),
the intermediate pinion (304) comprising a rotation-blocking device (305),
the angular travel of the pendular element (302) about its axis of rotation (306) being limited by an adjustable stop (308),
this adjustable stop (308) being adjusted such that, when the pendular element (302) comes into contact with the adjustable stop (308), the blocking device of the intermediate pinion (305) is just freed, whereas it is engaged when the pendular element (302) is in the neutral position,
the distance between the axis of rotation (306) of the pendular element and the axis of rotation (310) of the toothed wheel (309) being determined by the radii of the intermediate pinion (303) and of said toothed wheel (309), and by the fact that the toothed wheel and the intermediate pinion (303) are completely meshed when the pendular element (302) abuts against the adjustable stop (308).

2. Device according to Claim 1, **characterized in that** it comprises a first and a second intermediate pinion (303, 304) located in the vertical XZ plane and arranged, on the pendular element (302), on either side of the input pinion, and driven in rotation by the rotation of the latter,
at least one of the coplanar first and second intermediate pinions (304) comprising a rotation-blocking device (305),
the angular travel of the pendular element (302) about its axis of rotation (306) being limited between a minimum value and a maximum value by a first and a second adjustable stop (307, 308),
these adjustable stops (307, 308) being adjusted such that:
a) the lines of meshing of a pinion with the toothed wheel are in accordance with the theory,
b) when the pendular element (302) comes into contact with a stop, the blocking device of the intermediate pinion (305) is just freed, whereas it is engaged when the pendular element (302) is in the neutral position,
with this pendular assembly facing a toothed wheel (309) which is coaxial with the wheel of the landing gear, said toothed wheel being able to drive the rim (102) of said wheel in rotation,
the distance between the axis of rotation (306) of the pendular element and the axis of rotation (310) of the toothed wheel (309) being determined by the radii of the intermediate pinions (303, 304) and of said toothed wheel (309), and by the fact that the toothed wheel and one or other intermediate pinion are meshed when the pendular element (302) abuts against one or other adjustable stop (307, 308).

3. Device according to Claim 2, **characterized in that** each intermediate pinion (303, 304) comprises a blocking device (305, 310), these blocking devices (305, 310) being borne by the pendular element (302) and being synchronized such that the two intermediate pinions (303, 304) are simultaneously blocked or simultaneously free.

4. Device according to Claim 2 or 3, **characterized in that**, when an intermediate pinion (303) begins to engage in the toothed wheel (309), the pendular element (302) being not yet blocked by an adjustable stop (307, 308), the blocking device (305, 310) is partially freed and defines a rotational clearance for the first intermediate pinion (303).

5. Aircraft landing gear, **characterized in that** it comprises a drive device according to any one of the preceding claims.

6. Aircraft, **characterized in that** it comprises a drive device according to any one of Claims 1 to 4.
